# EUROPEAN PATENT SPECIFICATION

(11) **EP 1 209 390 B1**
(45) Date of publication and mention of the grant of the patent: **12.02.2003**
(21) Application number: 00830770.4
(22) Date of filing: 23.11.2000
(51) Int. Cl.: F16K 1/22

(54) **Butterfly valve**
Klappe
Robinets à papillon

(43) Date of publication of application: 29.05.2002
(73) Proprietor: Orton S.R.L., 20124 Milano (IT)
(72) Inventor: Vermigli, Franco, Castell'Arquato (Piacenza) (IT)
(74) Representative: Tansini, Elio Fabrizio

(56) References cited:
- US-A- 3 782 685
- US-A- 4 483 513

## Description

The present invention relates to a valve, in particular for flow adjustment in applications such as industrial installations and the like.

It is known that in a great number of industrial installations setting up of a duct network is made necessary to enable handling of fluid or gaseous materials on which possibly subsequent chemical treatments can be also carried out; for instance, this is true in the case of industries producing cryogenic gases or chemical installations wherein substances derived from mineral hydrocarbons are produced, but also in the case of desalination installations or installation for water treatment.

It is known from US 4483513 a valve assembly wherein a regulating plate (which constitutes the main component of a "butterfly" valve) is connected to a rotation shaft via two interlocking pins having a threaded section, meshing with a regulating plate expansion, and a cylindrical expansion projecting within the rotation shaft from the threaded section.
In this known valve assembly the recesses in the rotation shaft, which receive the interlocking pins, are shaped in a way such that one pin is subjected to a particular internal stress distribution (compression versus shear) when the shaft rotates in a predetermined direction.

Due to the great diversification in the typologies of fluid substances and the operating conditions (chemical properties, pressures, operating temperatures and flow rates, etc.), adoption of a series of flow-adjusting devices is made necessary at the various points of the duct system, in order, for example, to control inflow of reactants to a given chemical reactor or to evacuate excess pressures without impairing the operating safety.

Such adjustment devices are essentially known under the name of valves, and obviously there are different types of valves provided with different operating mechanisms depending on the operating parameters to meet.

Particularly known are the so-called "butterfly valves" adapted to adjust the flow rate of a fluid in a duct. Such valves are essentially made up of an adjusting element placed within the duct and the shape of which practically matches the inner section of the duct itself; this adjusting element is pivotally mounted along its axis and is rotated within the duct so as to close it more or less completely. In other words, the adjusting element, due to its rotation, continuously gives rise to a free section within the duct so as to enable creation of a given flow rate (from a minimum value which may be zero when the adjusting element completely closes the duct section, to a maximum value when the adjusting element practically lies in the central plane of the duct thereby defining the maximum free area for fluid passage).

At this point it is to be noted that in big industrial installations butterfly valves are required to have features involving very high mechanical strength, in addition to a high accuracy in the flow rate regulation; furthermore, a technical requirement which is often fundamental is represented by the valve ability to ensure a perfect hydraulic tightness in the position at which it completely inhibits fluid passage.

For meeting the above requirements, presently butterfly valves are completely made of metal materials (such as high tensile steel alloys), so that they are capable of resisting a wide variety of fluid substances having different physico/chemical features and keeping a structural strength and correct use conditions even if they are submitted to high pressures, high or low temperatures and big operating flow rates.

The structure of the butterfly valves of known type comprises, in addition to the adjusting element (which is usually a one-piece disc-shaped body the thickness of which is studied in connection with the mechanical stresses to which the valve is to be submitted), a rotation shaft integral with the adjusting element and having two hinge pins intended to be fitted in the valve body associated with the duct. Substantially, the adjusting element the edge of which is such shaped that it completely stops the fluid passage when the valve is in its closed position (by mechanically interfering with the inner wall of the duct), rotates around the axis of the rotation shaft and its rotation degree is proportionally connected with the duct flow rate.

When valves of the known type are manufactured, the rotation shaft must be coupled and made integral with the adjusting element so that the butterfly valve may keep a correct positioning in the duct (due to the presence of the hinge pins) and the rotation element may be operated by acting on appropriate expansions of the rotation axis emerging externally of the duct.

For carrying out such an assembly, in accordance with the known art the rotation shaft is fitted in an appropriate seating formed in the adjusting element and definitively linked to said adjusting element by mechanical constraints.

In more detail, for mounting of said mechanical constraints (typically, pegs, anchoring wedges or through screws) creation of a through cavity transverse to the rotation shaft axis is made necessary; this through cavity opens onto a corresponding fitting seating formed in the adjusting element, so that the mechanical constraint is inserted through the whole cross section of the rotation shaft, emerges therefrom and then engages in the fitting seating. In this way, a relative and irreversible locking between the rotation shaft and adjusting element is accomplished.

Although this locking typology is widely used in making high-performance butterfly valves, it should be noted however that the above described known art has some drawbacks.

In fact, following the described production technique, the transverse through cavity in the rotation shaft and the fitting seating in the adjusting element are practically to be made in a single step (mainly due to the fact that in butterfly valves for uses of this importance, these parts are to be manufactured with great accuracy in order to avoid arising of clearances and vibrations) in order to ensure a perfect compatibility between the two openings; this is still more important in the case of use of mechanical constraints of the screw type because the screw threading formed in the transverse through cavity must perfectly coincide with the corresponding screw threading of the fitting seating, otherwise simultaneous meshing of the same screw would be impossible.

Then it is apparent that this constraint in the production sequence involves considerable disadvantages in terms of flexibility and logistic efficiency: in particular, due to the true impossibility of completing the rotation shaft and adjusting element separately (so as to enable them to be assembled only at the construction moment) the whole production apparatus must be adapted to store finished and already assembled valves, which will bring about an important increase in costs and less agility in the logistic operations.

Still due to the impossibility of finishing and maintaining the rotation shafts and adjusting elements separate from each other, once the intended working has been carried out on the two concerned pieces it is practically impossible to separate them, even if there is a need for discarding one of the two pieces, should working defects appear in the metal material; this is clearly detrimental from the point of view of the overall economy of the manufacturing installation and in conclusion gives rise to an undesired waste of finished products, as the undamaged parts of the same cannot be conveniently recovered.

A further drawback connected with butterfly valves made in accordance with the known art is represented by the fact that the presence of the transverse through cavity involves removal of a great amount of material from the rotation shaft; as a result, the rotation shaft will be greatly weakened due to this working and therefore will be exposed to greater risks of yielding and breakage during use of the valve.

In the light of the above, it is a fundamental object of the present invention to manufacture a valve capable of substantially obviating the mentioned drawbacks.

In particular, it is a technical aim of the present invention to conceive a valve having a mechanical interconnection between the adjusting element and rotation shaft which can be made by working operations adapted to be carried out separately on the two components in question, while at the same time ensuring a perfect compatibility at the moment of mutual assembling and locking between the rotation shaft and adjusting element.

Another aim of the invention is to manufacture a valve having a particularly resistant structure even when strong pressure or temperature gradients or demanding flow conditions (high flow rates, frequent variations in thermal and fluid mechanics parameters) occur; in particular, the present invention aims at manufacturing a valve in which the mechanical interconnection between the rotation shaft and adjusting element is made without working operations involving important material removals from the shaft itself.

A further aim of the present invention resides in manufacturing a valve having high performance in terms of resistance to fluid passage, a substantial absence of clearances and inner tolerances and which is practically not subject to the onset of vibrations while at the same time adapting itself to a great variety of fields of use.

Finally, the present invention aims at obtaining a valve adapted to be manufactured using simple and inexpensive processes, which is beneficial to the productive and logistic economy.

The foregoing and further technical aims are substantially achieved by a valve for flow adjustment, in particular for ducts in industrial installations and the like having the features described in one or more of the appended claims.

Further features and advantages will become more apparent from the detailed description of a preferred but not exclusive embodiment of a valve, in particular for flow adjustment in applications such as industrial installations and the like, in accordance with the invention. This description will be taken hereinafter with reference to the accompanying drawings, given by way of non-limiting example, in which:
- Fig. 1 is a diagrammatic perspective view of a valve in accordance with the invention;
- Fig. 2 is an exploded perspective view of the valve in Fig. 1; and
- Fig. 3 is a section of the valve of the invention, taken along line III-III in Fig. 1.

With reference to the drawings, a valve in accordance with the present invention has been generally identified by reference numeral 1.

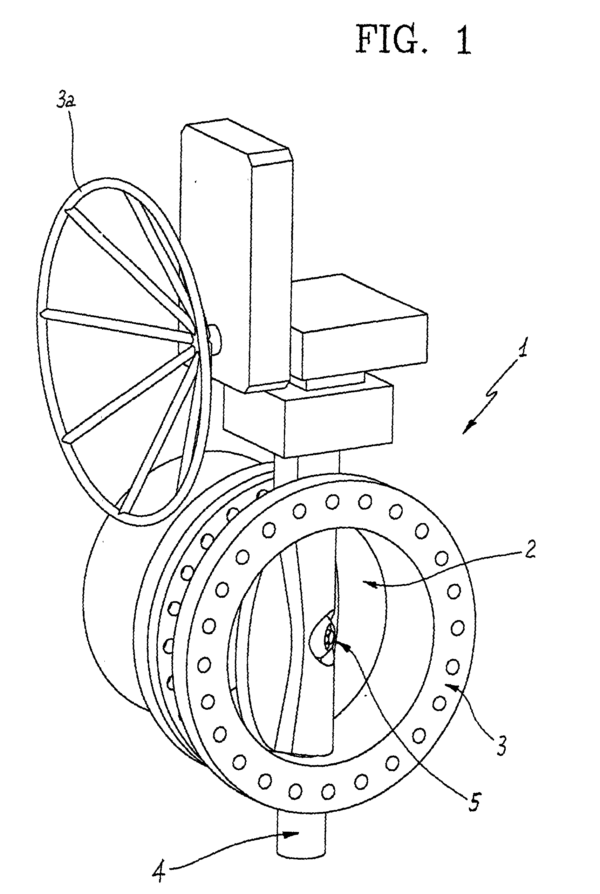

Valve 1 the components of which are preferably made of high tensile metal material (so that the valve can operate also under heavy conditions in terms of temperatures, pressures and/or chemical reactivity of the fluids) mainly comprises a support structure 3 having at least one passage cavity adapted to enable circulation of a fluid; such a support structure 3 can be made up of a cylindrical section provided with flanges at the ends (see Fig. 1 in particular), or it may directly consist of a pipe of an installation, depending on current requirements. Obviously, the support structure 3 is structured in such a manner as to externally have appropriate actuating means 3a operating on valve 1, known by themselves (see Fig. 1 again), enabling actuation of same.

An adjusting element 2 is located inside the support structure 3 and it has a front face 2a (which practically is the first valve face impinged on by the fluid circulating in the installation) and a rear face 2b opposite to the front face 2a.

Typically, the adjusting element 2 has a transverse shape substantially matching the shape of the passage cavity of the support structure 3 (it has a circular form for example, with a diameter corresponding to the diameter of the passage cavity of the flanged cylinder shown in Fig. 1), and obviously it can be at least moved from a first position in which it gives rise to a zero or minimum outflow section for said fluid (depending on the operating requirements) within the passage cavity itself to at least one second position in which it gives rise to a maximum outflow section for the fluid within the pipe or duct 3; clearly, the passage section is varied through the actuating means of valve 3a and it is proportional to the intended flow rate for the installation.

Valve 1 also comprises a rotation shaft 4 integrally in engagement with the adjusting element 2 and having a longitudinal-extension axis 4a (substantially directed along the vertical, in a typical industrial installation; see Fig. 1).

The rotation shaft 4 is substantially of cylindrical form and has an engagement side surface 4b; at the opposite ends of the longitudinal-extension axis 4a there are two pivot pins 4c which obviously are intended for rotatably engaging in the support structure 3 (typically, these pivot pins 4c are inserted either in the inner wall of the flanged cylinder or directly in the installation duct).

Conveniently, the adjusting element 2 can be moved from the first to the second positions by rotation along the longitudinal extension axis 4a of the rotation shaft 4 (which, as already said, is vertically oriented within the support structure 3); it should be also noted that rotation of the adjusting element 2 around shaft 3 is eccentric, so as to enable a perfect positioning of the valve at the position of zero or minimum flow rate.

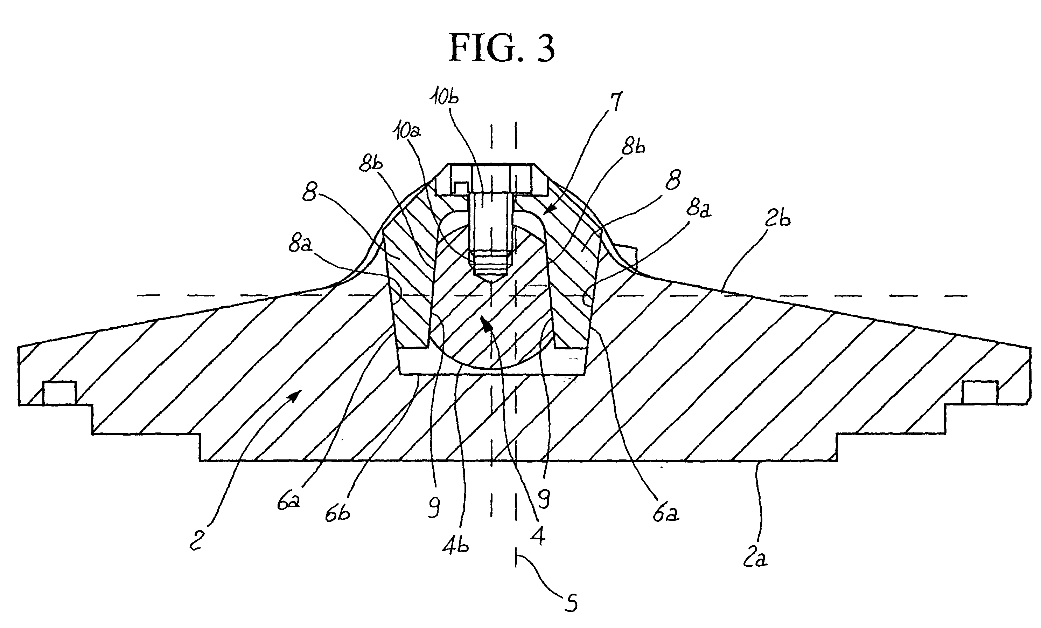

In other words, the rotation shaft 3 is mounted in an offset position with respect to the axis of symmetry "S" of the adjusting element 2, so that the rotatory motion of the latter is eccentric with respect to the longitudinal extension axis 4a (see Fig. 3).

Due to said eccentric rotation, the edge of the butterfly valve 1 (that in a particular embodiment is completely made of metal, and is therefore substantially non-deformable, unlike the typical case of valves provided with rubber gaskets) is capable of moving, without interferences, close to the inner wall of the passage cavity formed in the support structure 3 and of conveniently sealing the duct only when rotation has been completely carried out.

Obviously, if technical requirements call for it or make it possible, the rotation shaft 4 can be mounted in a perfectly centred position with respect to the adjusting element 2 without departing from the inventive concept of the present invention as hereinafter described.

Advantageously, valve 1 in accordance with the present invention has mechanical-interconnection means 5 which is operatively active between the adjusting element 2 and rotation shaft 4 to make them integral with each other.

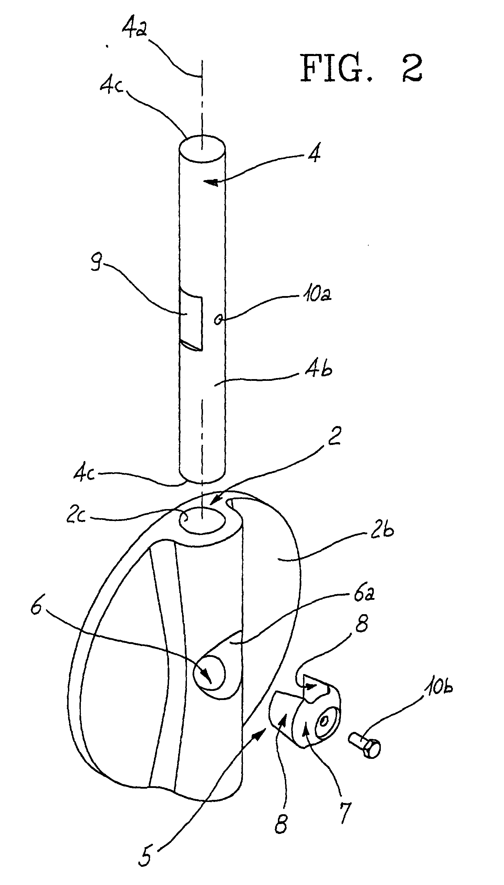

In more detail, this mechanical-interconnection means 5 comprises a fitting and locking seating 6 formed in the adjusting element 2 and a thrust body 7 the shape of which matches the shape of the fitting and locking seating 6 at least partly (Fig. 2).

Conveniently, the thrust body 7 is designed to set itself, under operating conditions, in a mechanical interference relationship with the rotation shaft 4 and simultaneously with the fitting and locking seating 6; in this way, juxtaposition of the above three components brings to the technical result that the rotation shaft 4 is made integral with the adjusting element 2 (and consequently when a given rotation is imparted to the rotation shaft 4 through the actuating means 3a, an identical rotation of the adjusting element 2 occurs).

In more detail, it is to be noted that the adjusting element 2 (practically having a disc-shaped conformation) comprises a connecting portion emerging from the rear face 2b and having a through cavity 2c. Advantageously, the through cavity 2c extends at a rotation axis of the adjusting element 2 which is offset with respect to the symmetry axis of the body itself, so as to perform the previously described eccentric rotation. Actually, under operating conditions the rotation shaft 4 is inserted into the through cavity 2c; in order to ensure an easy assembling procedure between the different components of valve 1, the fitting and locking seating 6 is put in communication with the through cavity 2c.

The fitting and locking seating 6 comprises a bottom face 6b of substantially flat configuration and preferably disposed on an inner plane substantially parallel to the front face 2a; geometrically connected with the bottom face 6b is a primary abutment surface 6a.

Advantageously, the primary abutment face 6a is of truncated conical form having a decreasing radius starting from the rear face 2b towards the front face 2a of the adjusting element 2; in other words, the fitting and locking seating 6 is ideally shaped like a frustum of cone transverse to the through cavity 2c (which is of cylindrical conformation) at the centre line of the through cavity 2c itself; this ideal frustum of cone has such an arrangement with respect to the cylindrical cavity that its base of major radius is turned outwardly of the rear face 2b, whereas its base of minor radius is at the inside of the adjusting element 2.

In accordance with the present invention, the thrust body 7 has at least one locating expansion 8 which is designed to engage against the fitting and locking seating 6 and simultaneously against the rotation shaft 4 under operating conditions.

Conveniently, the locating expansion 8 during assembling of valve 1 in accordance with the present invention, takes such a position that it is adjacent to, and at least partially in contact with, the engagement side surface 4b of the rotation shaft 4; in this way, the locating expansion 8 exerts on the surfaces with which it is in mechanical interference relationship, a force to which a friction force corresponds, said friction force being generated exactly on the surfaces in mutual contact and keeping the components of valve 1 interlocked with each other. Obviously, this technical solution is embodied by suitably selecting the tolerances between the different components of valve 1 and exerting a predetermined mounting pressure between the valve components.

More particularly, it can be viewed (from the accompanying figures) that the locating expansion 8 has at least one secondary abutment surface 8a designed to set itself, under operating conditions, close to and in contact with the primary abutment surface 6a at least partly. Advantageously, the shape of this secondary abutment surface 8a partly matches the shape of the primary abutment surface 6a and practically is made up of a portion of the frusto-conical side surface.

In accordance with the present invention and for the purpose of obtaining a symmetry in the inner mechanical reactions on assembling, the thrust body 7 comprises two locating expansions 8 symmetrically disposed with respect to the symmetry plane of the rotation shaft 4.

Advantageously, each of the two locating expansions 8 has a secondary abutment surface 8a adapted to set itself adjacent to and in contact with part of the primary abutment surface 6a under operating conditions, following the above described modalities.

In order to stabilize interconnection between the rotation shaft 4 and adjusting element 2 (and therefore ultimately to eliminate possible relative clearances arising between the components of valve 1), the rotation shaft 4 comprises at least one side seating 9 formed in the engagement side surface 4b and opening onto the fitting and locking seating 6 under operating conditions (Figs. 2, 3).

In accordance with the present invention, the side seating 9 is defined by a flat surface disposed parallel to the longitudinal extension axis 4a (see Fig. 2); in more detail, this flat surface is disposed in a geometric plane diverging (along an ideal direction starting from the rear face 2b and going towards the front face 2a) from an axis of symmetry of the rotation shaft 4.

Advantageously and for mechanical-symmetry reasons, valve 1 in accordance with the present invention can have a rotation shaft 4 comprising two side seatings 9, disposed symmetrically with respect to said axis of symmetry of the rotation shaft 4 itself; in this case, each of the locating expansions 8 comprises an auxiliary abutment surface 8b designed to set itself adjacent to and in contact with a respective side seating 9 under operating conditions.

By virtue of this particular construction architecture, the relative inclination of the side seating 9 (and consequently the inclination of the corresponding auxiliary abutment surface 8b) with respect to the average inclination of the secondary abutment surface 8a is of such an extent that the locating expansions exhibit a three-dimensional wedge-shaped configuration: in this way, the locating expansion 8 can conveniently be forcibly disposed within the fitting and locking seating 6, being thrust against the primary abutment surface 6a and simultaneously against the side seating. In short, due to the presence of the locating expansions 8 that are practically interposed between the engagement side surface 4b (belonging to the rotation shaft 4) and the primary abutment surface 6a (belonging to the adjusting element 2), relative rotations between shaft 4 and adjusting element 2 are inhibited.

Advantageously, tightening means 10 is also provided which is directly and exclusively connected with the thrust body 7 and the rotation shaft 4. This tightening means 10 is operatively active between the thrust body 7, adjusting element 2 and rotation shaft 4 to cause a pressure between the primary abutment surface 6a and secondary abutment surfaces 8a under operating conditions.

Conveniently, the tightening means 10 is also active to cause a pressure between the auxiliary abutment surfaces 8c and the side seatings 9 under operating conditions, so as to simultaneously accomplish a mechanical interference condition on all surfaces that, when the different components are assembled, are designed to set into mutual mechanical interference.

In accordance with the present invention, the tightening means 10 comprises one or more meshing seatings 10a and corresponding meshing bodies 10b. The meshing seating 10a is formed in the rotation shaft 4 (along a direction perpendicular to the longitudinal extension axis 4a; see Figs. 2 and 3); according to a preferred embodiment of the present invention the meshing seating 10a is screw threaded and extends internally of the rotation shaft 4 over a smaller length than a radius thereof. It is to be noted that such limitation in the extension depth of the meshing seating enables a great amount of mechanically resistant material to be held inside the rotation shaft 4 so that the shaft keeps a great mechanical efficiency and can be drilled to allow heating.

Parallelly, the meshing body 10b (designed to be fitted in the meshing seating 10a) is made of a screw having a head portion adapted to mechanically interfere with the thrust body 7 (in particular, with a portion of the thrust body 7 connecting the two locking expansions 8) and a threaded portion extending from the head portion and adapted to be screwed down in the meshing seating 10a under operating conditions.

Obviously the hole present in the thrust body 7 and adapted for fitting of the screw has no thread.

Advantageously, such an arrangement of the tightening means 10 enables the force exerted between the contact surface of the different valve components (primary abutment surface 6a, secondary abutment surfaces 8a, auxiliary abutment surfaces 8b and side seatings 9) to be adjusted by means of simple operations: in fact, by increasing or decreasing tightening of the screw 10b in the housing 10a, the elastic deformation of the thrust body 7 can be correspondingly increased or decreased, which body is urged to widen its locating expansions 8 thereby exerting greater or lesser pressure against the primary abutment surface 6a; parallelly, a greater or lesser tightening intensity causes a tendency of the rotation shaft 4 to be pressed against the auxiliary abutment surfaces 8b, reaching a mechanical effect similar to that occurring between the primary abutment surface 6a and secondary abutment surfaces 8a.

In addition, the present invention embodies a new process for assembling a valve of the above described type, comprising the following steps: first of all a support structure 3 (having at least one passage cavity), a rotation shaft 4 (on which at least one meshing seating 10a is formed), an adjusting element 2 (having at least on through cavity 2c designed to receive the rotation shaft 4 and a fitting and locking seating 6 connected with the through cavity 2c) and a thrust body 7 (the shape of which matches that of the fitting and locking seating 6 at least partly) are arranged.

Afterwards, the rotation shaft 4 is introduced into the through cavity 2c and the thrust body 7 is associated with the adjusting element 2 and the rotation shaft 4 in the fitting and locking seating 6.

Advantageously, in the present process the step of making the meshing seating 10a is provided to be carried out before the step of introducing the rotation shaft 4 into the through cavity 2c; in this way, in fact, all components of valve 1 can be finished separately (i.e. all parts of said components intended for interacting with the other valve pieces can be prepared) and full assembling of the valve 1 itself can be executed only in response to particular current requirements.

In particular, such a process further involves a sub-step in which, subsequently to associating the thrust body 7 with the adjusting element 2 and the rotation shaft 4, at least the rotation shaft 4 is mechanically linked with the adjusting element 2 through tightening means 10 (preferably of the above described type) directly interconnected between the rotation shaft 4 and the thrust body 7.

Advantageously, the tightening means 10 employed in the above sub-step comprises at least one meshing body 10b designed to be fitted in the meshing seating 10a, so as to carry out the already described mutual-tightening adjustment of the valve components.

The invention achieves important advantages.

First of all, it should be understood that the particular type of interconnection between the adjusting element and rotation shaft enables all the different components to be made and above all finished separately, which will bring about important benefits in terms of operating flexibility; more particularly, the possibility of separately machining the two components of the butterfly valve ensures interchangeability between the components, which is advantageous because replacement of the worn pieces becomes easy and convenient.

In addition, the mechanical constraint between the rotation shaft and adjusting element is achieved in such a manner that a perfect centring of the shaft in its seating and a perfect register between the contact surfaces is reached, which conditions are maintained even in the case of heavy uses.

A further advantage of the present invention is given by the fact that the mechanical machining operations to be carried out on the rotation shaft can be limited to removal of an amount of material; in particular, the present invention enables the central portion of the rotation shaft section to be maintained untouched, which is advantageous in terms of torsional strength.

Moreover, the present invention takes advantage of the almost complete absence of clearances, as compared with the known art, between the different components; this results in an important lack of vibrations during operation of the butterfly valve (exactly due to a perfect approaching between the corresponding surfaces of the components themselves).

It is also to be noted that the present invention has such a construction architecture that the components ensuring coupling between the rotation shaft and adjusting element are positioned at the face downstream of the adjusting element and such designed that they project from the face to the minimum possible extent; this results in an improvement in the fluid mechanics features of the butterfly valve itself.

Finally, the butterfly valve as herein described succeeds in obtaining all the above discussed advantages while keeping relatively low manufacturing costs taking into account the typology of the concerned devices and as it does not require very complicated machining operations.

## Claims

1. A valve, in particular for flow adjustment in applications such as industrial installations and the like, comprising:
- a support structure (3) having at least one passage cavity adapted to enable passage of a fluid;
- an adjusting element (2) with a front face (2a) and a rear face (2b) opposite to said front face (2a), said adjusting element (2) having a transverse shape substantially matching the shape of the passage cavity of said support structure (3) and being movable at least from a first position in which it gives rise to a zero or minimum outflow section for said fluid within the passage cavity itself to at least one second position in which it gives rise to a maximum outflow section for the fluid within the passage cavity;
- a rotation shaft (4) integrally in engagement with the adjusting element (2) and having a longitudinal extension axis (4a), said rotation shaft (4) comprising an engagement side surface (4b) and two rotation pins (4c) put at the opposite ends of said longitudinal extension axis (4a) and designed to rotatably engage in the support structure (3), the adjusting element (2) being movable from said first position to said second position through rotation along the longitudinal extension axis (4a) of said rotation shaft (4); and
- mechanical-interconnection means (5) operatively active between the adjusting element (2) and the rotation shaft (4) to make the adjusting element (2) integral with the rotation shaft (4), SAID mechanical-interconnection means (5) comprisING a thrust body (7) designed to set itself, under operating conditions, in a mechanical abutment relationship with the rotation shaft (4) and simultaneously with a rest surface of the adjusting element (2) to make the rotation shaft (4) integral with the adjusting element (2),
**CHARACTERIZED IN THAT** THE MECHANICAL-INTERCONNECTION MEANS ALSO COMPRISE TIGHTENING MEANS (10) DIRECTLY AND EXCLUSIVELY CONNECTED WITH THE THRUST BODY (7) AND THE ROTATION SHAFT (4).

2. A VALVE AS CLAIMED IN CLAIM 1, **CHARACTERIZED IN THAT** SAID TIGHTENING MEANS (10) IS OPERATIVELY ACTIVE BETWEEN THE THRUST BODY (7), ADJUSTING ELEMENT (2) AND ROTATION SHAFT (4) TO EXERT A PRESSURE THEREBETWEEN UNDER OPERATING CONDITIONS.

3. A valve as claimed in claims 1 OR 2, **characterized in that** the mechanical-interconnection means (5) comprises a fitting and locking seating (6) formed in the adjusting element (2), SAID thrust body (7) HAVING A shape which matches said fitting and locking seating (6) at least partly and designed to set itself, under operating conditions, in a mechanical interference relationship with the rotation shaft (4) and simultaneously with the fitting and locking seating (6) to make the rotation shaft (4) integral with the adjusting element (2).

4. A valve as claimed in ANYONE OF THE PRECEDING claims, **characterized in that** the adjusting element (2) comprises a connecting portion emerging from said rear face (2b) and having a through cavity (2c) at a rotation axis of the adjusting element (2), the rotation shaft (4) being introduced into said through cavity (2c) under operating conditions and the fitting and locking seating (6) being in communication with the through cavity (2c).

5. A valve as claimed in claims 3 OR 4, **characterized in that** said fitting and locking seating (6) comprises:
- a substantially flat bottom face (6b) preferably disposed in an inner plane substantially parallel to the front face (2a); and
- a primary abutment surface (6a) connected with said bottom face (6b), said primary abutment surface (6a) preferably being of truncated conical form and having a decreasing radius starting from the rear face (2b) towards the front face (2a) of the adjusting element (2).

6. A valve as claimed in claim 5, **characterized in that** said thrust body (7) has at least one locating expansion (8) intended for engagement against the fitting and locking seating (6) and simultaneously against the rotation shaft (4) under operating conditions, said locating expansion (8) being preferably adjacent to and at least partly in contact with said engagement side surface (4b) of the rotation shaft (4).

7. A valve as claimed in claim 6, **characterized in that** said locating expansion (8) has at least one secondary abutment surface (8a) designed to set itself, under operating conditions, adjacent to and at least partly in contact with said primary abutment surface (6a).

8. A valve as claimed in anyone of the preceding claims, **characterized in that** the thrust body (7) comprises two locating expansions (8), symmetrically disposed with respect to a plane of symmetry of the rotation shaft (4), each of the two locating expansions (8) having a secondary abutment surface (8a) designed to set itself adjacent to and in contact with part of the primary abutment surface (6a) under operating conditions.

9. A valve as claimed in anyone of claims 3 to 8, **characterized in that** the rotation shaft (4) comprises at least one side seating (9) formed in the engagement side surface (4b) and opening onto the fitting and locking seating (6) under operating conditions, said side seating (9) being preferably defined by a flat surface preferably disposed parallel with respect to the longitudinal extension axis (4a), said flat surface being more preferably disposed in a geometric plane diverging, in a direction from the rear face (2b) to the front face (2a), from a plane of symmetry of the rotation shaft (4).

10. A valve as claimed in claims 8 and 9, **characterized in that** the rotation shaft (4) comprises two side seatings (9), symmetrically disposed with respect to a plane of symmetry of the rotation shaft (4), each of the locating expansions (8) comprising an auxiliary abutment surface (8b) designed to set itself adjacent to and in contact with a respective side seating (9) under operating conditions.

11. A valve as claimed in ANYONE OF THE PRECEDING CLAIMS, **characterized in that** said tightening means (10) is operatively active between the thrust body (7), adjusting element (2) and rotation shaft (4) to exert a pressure between the primary abutment surfaces (6a) and secondary abutment surfaces (8a) under operating conditions, said tightening means (10) being also preferably active in order to exert a pressure between the auxiliary abutment surfaces (8c) and side seatings (9) under operating conditions.

12. A valve as claimed in claim 10 or 11, **characterized in that** said tightening means (10) comprises:
- at least one meshing seating (10a) formed in the rotation shaft (4) along a direction perpendicular to the longitudinal extension axis, said meshing seating (10a) being preferably screw threaded and more preferably extending within the rotation shaft (4) over a length smaller than a radius thereof;
- at least one meshing body (10b) designed to be introduced into said meshing seating (10a), said meshing body (10b) being preferably a screw having a head portion adapted to mechanically interfere with the thrust body (7) and a threaded portion extending from the head portion and adapted to be screwed down in the meshing seating (10a) under operating conditions.

13. A process for assembling a valve, preferably of the type in accordance with anyone of the preceding claims, comprising the following steps:
- arranging a support structure (3) having at least one passage cavity;
- arranging a rotation shaft (4);
- forming at least one meshing seating (10a) in the rotation shaft (4);
- arranging an adjusting element (2) having at least one through cavity (2c) designed to receive the rotation shaft (4) and a fitting and locking seating (6) connected with the through cavity (2c)
- arranging a thrust body (7) the shape of which matches the fitting and locking seating (6) at least partly;
- introducing the rotation shaft (4) into the through cavity (2c); and
- associating the thrust body (7) with the adjusting element (2) and the rotation shaft (4) in the fitting and locking seating (6);
**characterized in that** IT FURTHER COMPRISES THE FOLLOWING SUB-STEPS:
- SUBSEQUENTLY TO THE STEP OF ASSOCIATING THE THRUST BODY (7) WITH THE ADJUSTING ELEMENT (2) AND THE ROTATION SHAFT (4), MECHANICALLY LINKING AT LEAST THE ROTATION SHAFT (4) WITH THE ADJUSTING ELEMENT (2) THROUGH TIGHTENING MEANS (10) DIRECTLY AND EXCLUSIVELY INTERCONNECTED BETWEEN THE ROTATION SHAFT (4) AND THE THRUST BODY (7), THE TIGHTENING MEANS (10) PREFERABLY COMPRISING AT LEAST ONE MESHING BODY (10B) DESIGNED TO BE INTRODUCED INTO THE MESHING SEATING (10A).

14. A PROCESS AS CLAIMED IN CLAIM 13, **CHARACTERIZED IN THAT** the step of making the meshing seating (10a) is provided to be carried out before the step of introducing the rotation shaft (4) into the through cavity (2c).

## Patentansprüche

1. Ventil, insbesondere zur Durchflusseinstellung in Anwendungen wie Industrieanlagen und ähnlichen, umfassen:
- einen Tragaufbau (3), der mindestens eine Durchgangsausnehmung für den Durchtritt eines Mittels aufweist;
- ein Einstellelement (2), das eine vordere Stirnseite (2a) und eine zur vorderen Stirnseite (2a) abgewandte Stirnseite (2b) aufweist, wobei das Einstellelement (2) ein im wesentlichen zur Durchgangsausnehmung des Tragaufbaus (3) gegenprofiliertes Querprofil besitzt, und mindestens von einer Stellung, in der es innerhalb der Durchgangsausnehmung keinen oder einen minimalen Abflussquerschnitt festlegt, in eine zweite Stellung verstellbar ist, in der es für das Mittel innerhalb der Durchgangsausnehmung einen maximalen Abflussquerschnitt festlegt;
- eine am Einstellelement (2) fest in Eingriff stehende Drehwelle (4), die eine sich längs erstreckende Achse (4a) aufweist, wobei die Drehwelle (4) eine seitliche Eingriffsfläche (4b) und zwei Drehbolzen (4c) aufweist, die an abgewandten Enden der sich längs erstreckenden Achse (4a) angeordnet und dazu bestimmt sind, drehbar im Tragaufbau (3) in Eingriff zu kommen, wobei das Einstellelement (2) von der ersten Stellung in die zweite Stellung durch Drehung längs der sich der längserstreckenden Achse (4a) zur Drehwelle (4) verstellbar ist; und
- mechanische Verbindungsmittel (5), die wirksam zwischen dem Einstellelement (2) und der Drehwelle (4) zur Festlegung des Einstellelementes (2) an der Drehwelle (4) wirken, wobei die mechanischen Verbindungsmittel (5) einen Schubkörper (7) umfassen, der dazu bestimmt ist, in Arbeitsstellung an der Drehwelle (4) und gleichzeitig an einer Anlagefläche des Einstellelementes (2) zur Festlegung der Drehwelle (4) am Einstellelement (2) zum Anschlagen kommt,
**dadurch gekennzeichnet, dass** die mechanischen Verbindungsmittel auch Klemmmittel (10) umfassen, die mit dem Schubkörper (7) und der Drehwelle (4) unmittelbar und ausschließlich verbunden sind.

2. Ventil nach Anspruch 1, **dadurch gekennzeichnet, dass** die Klemmmittel (10) zwischen dem Schubkörper (7), dem Einstellelement (2) und der Drehwelle (4) zur Ausübung eines Druckes zwischen diesen in Arbeitsstellung wirken.

3. Ventil nach Anspruch 1 oder 2, **dadurch gekennzeichnet, dass** die mechanischen Verbindungsmittel eine Kupplungs- und Arretieraufnahme (6) aufweisen, die im Einstellelement (2) ausgenommen ist, wobei der Schubkörper (7) eine mindestens zur Kupplungs- und Arretieraufnahme (6) gegenprofilierte Form besitzt und dazu bestimmt ist, in Arbeitsstellung sich mit der Drehwelle (4) und gleichzeitig mit der Kupplungs- und Arretieraufnahme (6) zur Festlegung der Drehwelle (4) am Einstellelement (2) zu überschneiden.

4. Ventil nach einem beliebigen der vorstehenden Ansprüche, **dadurch gekennzeichnet, dass** das Einstellelement(2) einen Übergangsabschnitt umfasst, der von der hinteren Stirnseite (2b) vorspringt und eine durchgehende Ausnehmung (2c) im Bereich einer Drehachse des Einstellelementes (2) aufweist, wobei die Drehwelle (4) in der durchgehenden Ausnehmung (2c) in Arbeitsstellung eingeführt ist und die Kupplungs- und Arretieraufnahme (6) mit der durchgehenden Ausnehmung (2c) in Verbindung steht.

5. Ventil nach Anspruch 3 oder 4, **dadurch gekennzeichnet, dass** die Kupplungs- und Arretieraufnahme (2) umfasst:
- eine im wesentlichen ebene Grundstirnseite (6b), die bevorzugter Weise auf einer zur vorderen Stirnseite (2a) im wesentlichen parallelen Innenebene angeordnet ist; und
- eine Hauptanschlagfläche (6a), die mit der Grundstirnfläche (6b) verbunden ist, wobei die Hauptanschlagfläche (6a) bevorzugter Weise kegelstumpfförmig ausgebildet ist und einen Radius aufweist, der ausgehend von der hinteren Stirnseite (6b) in Richtung der vorderen Stirnseite (2a) des Einstellelementes (2) abnimmt.

6. Ventil nach Anspruch 5, **dadurch gekennzeichnet, dass** der Schubkörper (7) mindestens einen Anschlagkragen (8) aufweist, der dazu bestimmt ist, in der Kupplungs- und Arretieraufnahme (6) und gleichzeitig an der Drehwelle (4) in Arbeitsstellung in Eingriff zu kommen, wobei der Anschlagkragen (8) bevorzugter Weise an und mindestens teilweise mit der seitlichen Eingriffsfläche (4b) der Drehwelle (4) anliegend ist.

7. Ventil nach Anspruch 6, **dadurch gekennzeichnet, dass** der Anschlagkragen (8) mindestens eine Nebenanschlagfläche (8a) besitzt, die dazu bestimmt ist, in Arbeitsstellung an und mindestens teilweise in Berührung mit der Hauptanschlagfläche (6a) zu liegen zu kommen.

8. Ventil nach einem beliebigen der vorstehenden Ansprüche, **dadurch gekennzeichnet, dass** der Schubkörper (7) zwei Anschlagkragen (8) aufweist, die gegenüber einer Symmetrieebene der Drehwelle (4) symmetrisch angeordnet sind, wobei jeder der beiden Anschlagkragen (8) eine Nebenanschlagfläche (8a) aufweist, die dazu bestimmt ist, an der Hauptanschlagfläche (6a) in Arbeitsstellung zum Anliegen und mit einem Teil derselben in Berührung zu kommen.

9. Ventil nach einem beliebigen der Ansprüche von 3 bis 8, **dadurch gekennzeichnet, dass** die Drehwelle (4) mindestens eine Seitenaufnahme (9) umfasst, die an der seitlichen Eingriffsfläche (4b) ausgenommen ist und in Arbeitsstellung in der Kupplungs- und Arretieraufnahme (6) zu liegen kommt, wobei die ebene Fläche noch bevorzugterer Weise auf einer geometrischen Ebene angeordnet ist, die von der hinteren Stirnseite (2b) zur vorderen Stirnseite (2a) von einer Symmetrieebene der Drehwelle (4) auseinander läuft.

10. Ventil nach Anspruch 8 und 9, **dadurch gekennzeichnet, dass** die Drehwelle (4) zwei. Seitenaufnahmen (9) aufweist, die gegenüber einer Symmetrieebene der Drehwelle (4) symmetrisch angeordnet sind, wobei jeder der Anschlagkragen (8) eine Hilfsanschlagfläche (8b) umfasst, die dazu bestimmt ist, in Arbeitsstellung an der entsprechenden, seitlichen Aufnahme (9) zum Anliegen und in Berührung zu kommen.

11. Ventil nach einem beliebigen der vorstehenden Ansprüche, **dadurch gekennzeichnet, dass** die Klemmmittel (10) zwischen dem Schubkörper (7), dem Einstellelement (2) und der Drehwelle (4) zur Ausübung eines Drucks zwischen den Hauptanschlagflächen (6a) und den Nebenanschlagflächen (8a) in Arbeitsstellung wirken, wobei die Klemmmittel (10) ebenfalls bevorzugter Weise zur Ausübung eines Druckes zwischen den Hilfsanschlagflächen (8a) und den Seitenaufnahmen (9) in Arbeitsstellung wirken.

12. Ventil nach Anspruch 10 oder 11, **dadurch gekennzeichnet, dass** die Klemmmittel (10) umfassen:
- mindestens einen Eingriffsitz (10a), der in der Drehwelle (4) längs einer zur sich längs erstreckenden Achse senkrechten Richtung ausgenommen ist, wobei der Eingriffsitz (10a) bevorzugter Weise mit einem Gewinde versehen ist und sich noch bevorzugterer Weise innerhalb der Drehwelle (4) um eine Länge erstreckt, die unterhalb dessen Radius liegt;
- mindestens einen Eingriffskörper (10b) der dazu bestimmt ist, in den Eingriffsitz (10a) eingebracht zu werden, wobei der Eingriffskörper (10b) bevorzugter Weise eine Schraube mit einem Kopfabschnitt ist, der dazu bestimmt ist, sich mechanisch mit dem Schubkörper (7) und einem Gewindeabschnitt zu überschneiden, der sich vom Kopfabschnitt erstreckt und dazu bestimmt ist, im Eingriffssitz (10a) in Arbeitsstellung eingeschraubt zu werden.

13. Verfahren zum Zusammenbau eines Ventils, bevorzugter Weise der Art in Übereinstimmung mit einem beliebigen der vorstehenden Ansprüche, umfassend die folgenden Schritte:
- Bereitstellung eines Tragaufbaus (3), der mindestens eine Durchgangsausnehmung aufweist;
- Bereitstellung einer Drehwelle (4);
- Ausführung mindestens eines Eingriffssitzes (10a) in der Drehachse (4);
- Bereitstellung eines Einstellelementes (2), das mindestens eine durchgehende Ausnehmung (2c) zur Aufnahme der Drehwelle (4) und eine Kupplungs- und Arretieraufnahme (6) aufweist, die mit der durchgehenden Ausnehmung (2c) verbunden ist;
- Bereitstellung eines Schubkörpers (7), der mindestens teilweise zur Kupplungs- und Arretieraufnahme (6) gegenprofiliert ist;
- Einbringung der Drehwelle (4) in die durchgehende Ausnehmung (2c); und
- Zuordnung des Schubkörpers (7) zum Einstellelement (2) und zur Drehwelle (4) in der Kupplungs- und Arretieraufnahme (6);
**dadurch gekennzeichnet, dass** es überdies folgende Unterschritte umfasst:
- nachfolgend zum Schritt der Zuordnung des Schubkörpers (7) zum Einstellelement (2) und zur Drehwelle (4), mechanisches Anbinden mindestens der Drehwelle (4) am Einstellelement (2) über Klemmmittel (10), die unmittelbar und ausschließlich der Drehwelle (4) und dem Schubkörper (7) miteinander verbunden sind, wobei die Klemmmittel (10) bevorzugter Weise mindestens einen Eingriffskörper (10b) umfassen, die dazu bestimmt ist, in den Eingriffsitz (10a) eingebracht zu werden.

14. Verfahren nach Anspruch 13, **dadurch gekennzeichnet, dass** der Schritt vorgesehen wird, den Eingriffsitz (10a) vor dem Schritt des Einbringens der Drehwelle (4) in die durchgehende Ausnehmung (2c) durchgeführt wird.

## Revendications

1. Soupape, notamment pour le réglage du débit, à utiliser dans des installations industrielles et similaires, comprenant:
- une structure support (3) présentant au moins une cavité de passage destinée à permettre le passage d'un fluide;
- un élément de réglage (2) présentant une face avant (2a) et une face arrière (2b) opposée à ladite face avant (2a), ledit élément de réglage (2) ayant une forme transversale essentiellement épousant la forme de la cavité de passage de ladite structure support (3) et étant mobile au moins d'une première position, à laquelle il donne lieu à une section de débit nulle ou minimum pour ledit fluide dans ladite cavité de passage, à au moins une deuxième position, à laquelle il donne lieu à une section de débit maximum pour le fluide à l'intérieur de la cavité de passage;
- un arbre de rotation (4) solidarisé avec l'élément de réglage (2) et présentant un axe d'extension longitudinale (4a), ledit arbre de rotation (4) comprenant une surface latérale d'engagement (4b) et deux pivots de rotation (4c) placés aux extrémités opposées dudit axe d'extension longitudinale (4a) et destinés à s'engager en rotation dans la structure support (3), l'élément de réglage étant mobile de ladite première position à ladite deuxième position grâce à la rotation le long de l'axe d'extension longitudinale (4a) dudit arbre de rotation (4); et
- des moyens d'interconnexion mécanique (5) actifs de manière opératoire entre l'élément de réglage (2) et l'arbre de rotation (4) pour rendre l'élément de réglage (2) solidaire de l'arbre de rotation (4), lesdits moyens d'interconnexion mécanique (5) comprenant un corps de poussée (7) destiné à se mettre, en conditions opératoires, en relation de butée mécanique avec l'arbre de rotation (4) et simultanément avec une surface d'appui de l'élément de réglage (2) pour rendre l'arbre de rotation (4) solidaire de l'élément de réglage (2),
**caractérisée en ce que** les moyens d'interconnexion mécanique comportent également des moyens de serrage (10) reliés directement et exclusivement au corps de poussée (7) et à l'arbre de rotation (4).

2. Soupape selon la revendication 1, **caractérisée en ce que** lesdits moyens de serrage (10) sont actifs de manière opératoire entre le corps de poussée (7), l'élément de réglage (2) et l'arbre de rotation (4), pour exercer une pression entre ces derniers en conditions opératoires.

3. Soupape selon la revendication 1 ou 2, **caractérisée en ce que** les moyens d'interconnexion mécanique (5) comportent une siège d'emboîtement et de blocage (6) formé dans l'élément de réglage (2), ledit corps de poussée (7) ayant une forme épousant du moins partiellement celle dudit siège d'emboîtement et de blocage (6) et étant destiné à se mettre, en conditions opératoires, en position d'interférence mécanique avec l'arbre de rotation (4) et simultanément avec le siège d'emboîtement et blocage (6) pour rendre l'arbre de rotation (4) solidaire de l'élément de réglage (2).

4. Soupape selon l'une quelconque des revendications précédentes, **caractérisée en ce que** l'élément de réglage (2) comporte une portion de raccordement faisant saillie de ladite face arrière (2b) et présentant une cavité de passage (2c) en correspondance avec un axe de rotation de l'élément de réglage (2), l'arbre de rotation (4) étant inséré dans ladite cavité de passage (2c) en conditions opératoires et le siège d'emboîtement et de blocage (6) étant en communication avec la cavité de passage (2c).

5. Soupape selon la revendication 3 ou 4, **caractérisée en ce que** ledit siège d'emboîtement et de blocage (6) comporte:
- une face de fond essentiellement plate (6b) disposée de préférence sur un plan intérieur sensiblement parallèle à la face avant (2a); et
- une surface de butée primaire (6a) reliée à ladite face de fond (6b), ladite surface de butée primaire (6a) étant de préférence de conformation tronconique et ayant un rayon allant décroissant à partir de la face arrière (2b) vers la face avant (2a) de l'élément de réglage (29:

6. Soupape selon la revendication 5, **caractérisée en ce que** ledit corps de poussée (7) présente au moins une expansions de référence (8) destinée à s'engager contre le siège d'emboîtement et de blocage (6) et simultanément contre l'arbre de rotation (4) en conditions opératoires, ladite expansion de référence (8) étant de préférence attenante à, et au moins partiellement en contact avec ladite surface latérale d'engagement (4b) de l'arbre de rotation (4).

7. Soupape selon la revendication 6, **caractérisée en ce que** ladite expansion de référence (8) a au moins une surface de butée secondaire (a) destinée à se disposer, en conditions opératoires, attenante à, et au moins partiellement en contact avec ladite surface de butée primaire (6a).

8. Soupape selon l'une quelconque des revendications précédentes, **caractérisée en ce que** le corps de poussée (7) comporte deux expansions de référence (8), disposées symétriquement par rapport à un plan de symétrie de l'arbre de rotation (4), chacune des deux expansions de référence (8) présentant une surface de butée secondaire (a) destinée à se disposer attenante à, et en contact avec une partie de la surface de butée primaire (6a) en conditions opératoires.

9. Soupape selon l'une quelconque des revendications 3 à 8, **caractérisée en ce que** l'arbre de rotation (4) comporte au moins un siège latéral (9) formé sur la surface latérale d'engagement (4b) et débouchant dans le siège d'emboîtement et de blocage (6) en conditions opératoires, ledit siège latéral (9) étant de préférence défini par une surface plate disposée de préférence parallèle à l'axe d'extension longitudinale (4a), ladite surface plate étant plus préférablement disposée sur un plan géométrique divergent d'un plan de symétrie de l'arbre de rotation (4), à partir de la face arrière (2b) vers la face avant (2a).

10. Soupape selon les revendications 8 et 9, **caractérisée en ce que** l'arbre de rotation (4) comporte deux sièges latéraux (9), disposés symétriquement par rapport à un plan de symétrie de l'arbre de rotation (4), chacune des expansions de référence (8) comprenant une surface de butée auxiliaire (8b) destinée à se disposer attenante à, et en contact avec un siège latéral respectif (9) en conditions opératoires.

11. Soupape selon l'une quelconque des revendications précédentes, **caractérisée en ce que** lesdits moyens de serrage (10) sont actifs de manière opératoire entre le corps de poussée (7), l'élément de réglage (2) et l'arbre de rotation (4) pour exercer une pression entre les surfaces de butée primaires (6a) et les surfaces de butée secondaires (a) en conditions opératoires, lesdits moyens de serrage (10) étant de préférence également actifs pour exercer une pression entre les surfaces de butée auxiliaires (8c) et les sièges latéraux (9) en conditions opératoires.

12. Soupape selon la revendication 10 ou 11, **caractérisée en ce que** lesdits moyens de serrage (10) comportent:
- au moins un siège d'engrènement (10a) formé dans l'arbre de rotation (4) le long d'une direction perpendiculaire à l'axe d'extension longitudinale, ledit siège d'engrènement (10a) étant de préférence taraudé et plus préférentiellement s'étendant à l'intérieur de l'arbre de rotation (4) sur une longueur inférieure à l'un de ses rayons;
- au moins un corps d'engrènement (10b) destiné à s'insérer dans ledit siège d'engrènement (10a), ledit corps d'engrènement (10b) étant de préférence une vis ayant une portion de tête destinée à interférer mécaniquement avec le corps de poussée (7) et une portion filetée s'étendant de la portion de tête et destinée à être vissée dans le siège d'engrènement (10a) en conditions opératoires.

13. Procédé d'assemblage d'une soupape, de préférence du type selon l'une quelconque des revendications précédentes, comprenant les étapes suivantes:
- disposer une structure support (3) présentant au moins une cavité de passage;
- disposer un arbre de rotation (4);
- réaliser au moins un siège d'engrènement (10a) dans l'arbre de rotation (4);
- disposer un élément de réglage (2) présentant au moins une cavité de passage (2c) destinée à recevoir l'arbre de rotation (4) et un siège d'emboîtement et de blocage (6) relié à la cavité de passage (2c);
- disposer un corps de poussée (7) dont la forme épouse du moins partiellement celle du siège d'emboîtement et de blocage (6);
- insérer l'arbre de rotation (4) dans la cavité de passage (2c); et
- associer le corps de poussée (7) à l'élément de réglage (2) et à l'arbre de rotation (4) dans le siège d'emboîtement et de blocage (6);
**caractérisé en ce qu'**il comporte en outre les sous-étapes suivantes:
- après l'étape d'associer le corps de poussée (7) à l'élément de réglage (2) et à l'arbre de rotation (4), lier mécaniquement au moins l'arbre de rotation (4) à l'élément de réglage (2) à travers des moyens de serrage (10) interconnectés directement et exclusivement entre l'arbre de rotation (4) et le corps de poussée (7), les moyens de serrage (10) comprenant de préférence au moins un corps d'engrènement (10b) destiné à être inséré dans le siège d'engrènement (10a).

14. Procédé selon la revendication 13, **caractérisé en ce qu'**on prévoit que l'étape de réaliser le siège d'engrènement (10a) soit exécutée avant l'étape d'insérer l'arbre de rotation (4) dans la cavité de passage (2c).
